# EUROPEAN PATENT SPECIFICATION

(11) **EP 2 912 392 B1**
(45) Date of publication and mention of the grant of the patent: **20.03.2019**
(21) Application number: 13780071.0
(22) Date of filing: 22.10.2013
(51) Int. Cl.: F27B 9/06, F27B 9/39, F27D 15/00, C21D 1/673, C21D 9/46

(54) **ARRANGEMENT AND METHOD FOR HEATING AND WORKING SHEET MATERIAL**
ANORDNUNG UND VERFAHREN ZUM HEIZEN UND BEARBEITEN VON BLECHMATERIAL
AGENCEMENT ET PROCÉDÉ DE CHAUFFAGE ET DE TRAVAIL DE MATÉRIAU DE FEUILLE

(30) Priority: 23.10.2012 EP 12007284
(43) Date of publication of application: 02.09.2015
(73) Proprietor: Tata Steel UK Ltd., London SW1P 4WY (GB)
(72) Inventor: CLOUGH, Andrew Jonathan, 1951 JZ Velsen-Noord (NL); MCGREGOR, Iain James, 1951 JZ Velsen-Noord (NL)
(74) Representative: Blauw, Frans Gerard
(86) International application number: PCT/EP2013/003174
(87) International publication number: WO 2014/063807

(56) References cited:
- WO-A1-86/05820
- WO-A1-2009/116005
- DE-A1-102009 026 251

## Description

### Field of the invention

The invention relates to an arrangement for heating and working sheet material, the arrangement comprising a heating oven provided with a transport opening at the underside thereof and transport means to transport pieces of sheet material through the transport opening out of the heating oven to a device for working the sheet material.

### Background of the invention

A heating oven with a transport opening at the underside thereof and transport means to transport pieces of steel blanks through the transport opening out of the heating oven is known from EP2085728. The transport means used with the heating oven according to EP2085728 comprise an articulated arm with which the heated steel blanks are taken out of the heating oven and delivered at a further station to work the heated steel blanks. WO 86/05820A1 describes an arrangement for heating and working blanks.

A common operation after heating a steel blank is to subject the heated steel blank to a forming operation. In the industry this hot forming of steel parts from a steel blank is widely used to make automotive components. More in particular the steel blanks are heated in a heating oven to a temperature above the Ac3 temperature to at least partially transform into austenite after which the steel blanks are hot-formed in a forming tool. In the forming tool the steel blanks are formed and at the same time rapidly cooled in order to have the austenite transform into martensite. To accomplish that transformation the steel blank has to be cooled at a rate of typically 30°C/sec., or even more rapidly, to a temperature below the martensite start temperature. Due to the formation of martensite the formed steel part becomes very strong and hard. This process is well known in the industry, see for instance GB1490535, and is variously described as 'die quenching', 'hot forming', 'press hardening' or 'hot pressing'. Steel sheet alloyed with boron is known to form high percentages of martensite during the die quenching process and for this reason the material produced by this process is known as 'boron steel'.

In the industrial hot-forming process the steel blank is heated in a heating oven to a temperature of about 900-950°C, after which the hot steel blank is picked up from the heating oven by a robotic arm transfer device using grippers. The robotic arm transfers the hot steel blank to a nearby positioned forming tool. To enable the robotic arm with the grippers to place the blank in position in the forming tool requires a large opening distance of the forming tool, typically between 0.5 m and 1.0 m. Once the steel blank is positioned and released, the robotic arm with the grippers is taken away after which the forming tool closes and forms the hot steel blank. The larger the distance between the forming tool parts required to accommodate the robotic arm with the grippers the more time is needed to close the forming tool. Moreover, using the heating oven according to EP2085728 considerable time is lost by having to handle the hot blank from a vertical orientation to a horizontal orientation to place the hot blank in the forming tool.

Since the 1990s the die-quenching process has become widely adopted for the manufacture of the strongest parts from steel blanks for instance for motor vehicle bodies, doors, bumpers and chassis components. The thickness range of steel sheet used typically ranges from 1.2 mm to 4.0 mm. A number of difficulties are found when attempting to die quench steel blanks outside this range:
- thicker than 4mm: the thick sheet has greater heat capacity and is therefore more difficult to cool sufficiently quick to allow for the transformation to martensite, and
- thinner than 1.2mm: at this gauge of material and below, the loss of heat can be so high that the temperature of the sheet will drop too much before it is brought into the forming tool to allow for proper forming and formation of martensite.

### Objectives of the invention

It is an objective of the present invention according to independent apparatus claim 1 to provide an arrangement for heating and forming blanks wherein the temperature drop of the blanks during transport from heating means to forming tool is limited as much as possible.

It is another objective of the present invention according to independent method claim 9 to provide an arrangement for heating and forming blanks wherein the time to transfer a hot blank from the heating oven to the forming tool and close the forming tool is greatly reduced in comparison to the prior art.

It is another objective of the present invention to provide an arrangement for heating and forming blanks which allows the handling of hot blanks with a thickness of 1.2mm and less.

It is another objective of the present invention to provide an arrangement for heating and forming blanks wherein the transport of the blanks from heating oven to forming tool is a translational movement in downward direction.

It is another objective of the present invention to provide an arrangement for heating and forming blanks wherein the transport distance between heating oven and forming tool is as short as possible.

It is another objective of the present invention to provide an arrangement for heating and forming blanks wherein both the transport time and transport distance between heating oven and forming tool is as short as possible.

It is another objective of the present invention to provide an arrangement for heating and forming blanks such that the cooling rate of the blank within the tool is much greater than 30°C/sec.

It is still another objective of the present invention to provide an arrangement for heating and forming blanks wherein the handling of the blanks is limited to a minimum.

### Description of the invention

According to a first aspect of the invention one or more of the objectives of the invention are realized by providing an arrangement for heating and working blanks, the arrangement comprising a heating oven provided with a transport opening at the underside thereof and transport means to transport blanks through the transport opening out of the heating oven, wherein the arrangement further comprises a forming tool and wherein the heating oven and forming tool are positioned with respect to each other such that the transport opening of the heating oven is positioned above the forming tool.

Throughout the description the term "sheet material" or "blank" is used which includes a flat portion of material cut or stamped from metal or plastic sheet or strip as well as such a portion of metal or plastic sheet that has already been subjected to some form of processing or partial processing. The term "metal" comprises steel, aluminium, magnesium, titanium etc. and including all alloys. The term "plastic" comprises all plastic sheet material suitable to be processed with the arrangement and method according to the invention. If steel or a specific metal is meant this is so indicated.

With the arrangement according to the invention the 'transfer time', which is the elapsed time to transfer the heated piece of sheet material from the heating oven to the forming tool together with the elapsed time to close the forming tool, can be greatly reduced in comparison with the transfer time as with the prior art. With such a short transfer time unwanted oxidation and degradation of the surface of the blank is prevented as much as possible.

The forming tool is positioned with respect to the transport opening of the heating oven such that the opening presented by the forming tool, when opened to receive a blank, and the transport opening of the heating oven are in register with each other. With the openings of the heating oven and forming tool being in register the transport of a hot blank from the heating oven to the forming tool is a simple single translational movement without that any rotation of the hot blank is needed.

The heating oven is configured to heat blanks in upright position. With this feature the hot blanks can simply be transported downward when above the transport opening of the heating oven. The heating oven can be a conveyor type or rotary type of heating oven wherein the blanks are transported through the heating oven in an upright position, for example in a hanging position.

In order to transport the hot blanks from the heating oven to the forming tool it is provided that the transport means comprises a gripping member for gripping a blank, an extendable arm connected to the gripping member and actuator means to actuate the gripping member and the extendable arm. The transport means are positioned above the transport opening in the heating oven and the extendable arm is extendable in downward direction so that a hot blank can be gripped and lowered out of the heating oven.

According to a further aspect of the invention the forming tool comprises form parts moveable with respect to each other in a direction transverse to the direction of transport of a blank from the heating oven by the transport means. With this further feature the hot blank can be lowered from out of the heating oven in a simple downward movement directly into the forming tool.

According the invention holding pins are provided in the forming tool, to hold a piece of sheet material in position between the form parts of the forming tool, and control means to control the holding pins. After a hot blank is lowered into the forming tool the holding pins, which are positioned at opposite sides of the forming tool, are moved against the hot blank to hold in an upright position. The hot blank can then be released by the gripping member of the transport means and the extendable arm retracted to its original position. As soon as the extendable arm with the gripper means are out of the forming tool, the forming tool can be closed to form the blank.

With the arrangement according to the invention the transfer time is 2 seconds or better which allows processing with good results hot blanks with a thickness in the range of 0.4-1.2mm. Although the arrangement is especially useful for handling relatively thin sheet material, it can of course also be used for thicker sheet material. The advantage with thicker sheet material is the gain in productivity because of the short transfer time.

The forming tool is provided with cooling means in order to cool the formed hot blank rapidly, which with steel blanks is to a temperature below the martensite start temperature. The steel blank is held in the cooled forming tool for a sufficient time to produce the desired transformation to martensite. With thin steel blanks this may be as quick as two or three seconds.

The forming tool is opened and the formed component is removed after the sliding pins are retracted. At that stage a formed steel component has a temperature in the range of 100-200°C and is transferred to a holding station where it cools to room temperature before further processing, such as trimming, cleaning etc.

The time needed to open the forming tool, the release and removal of the formed component out of the forming tool is about three seconds. With the arrangement according to the invention the total cycle time is about seven seconds which is approximately half the best cycle time achieved in hot-forming at present.

The invention also provides a method for heating and press hardening blanks using the arrangement according to one or more of claims 1-11, wherein the method comprises the steps of:
- supplying a blank in upright position in the heating oven,
- heating the blank to a temperature within a predefined temperature range,
- transporting the hot blank in downward direction into an upright position between form parts of the forming tool,
- forming the hot blank in the forming tool, and
- cooling the formed blank in the forming tool.

It is further provided that in the case of a steel blank the steel is heated to a temperature in the range of 750°- 1100°C, more preferably in the range of 900°-950°C. Preferably the heating oven is provided with means to provide a protective atmosphere in the heating oven to prevent oxidation of the surface of the blank or of a coating on the surface of the blank. By reducing the time that the hot metal is subjected to a normal atmosphere there is a significant reduction in the build up of oxides and other surface contamination. This gives the following benefits:
- a reduced requirement of surface cleaning after die quenching, and
- reduced wear and damage to the surface of the die-quenching forming tools.

According to a further aspect of the invention the blank is a blank of steel alloyed with boron. According to a further aspect the steel blank has a thickness of 1.2mm or less. A practical lower limit for the thickness is 0.4mm, below this limit handling and processing of the blank becomes very difficult and the strength of the formed component will not be enough for most applications.

The cooling means of the forming tool are designed to cool thin steel blanks with a cooling rate greater than 30°C/sec. This cooling rate is partially achieved by the use of thin steel sheet having both lower thermal capacity and greater heat transfer rate. At this higher cooling rate it is possible to use a wider range of steel grades that fully or partially transform to martensite without the necessity to use boron as an alloying element.

### Brief description of the drawings

The invention will be further explained on hand of the example shown in the drawing, in which:
- fig.1: shows a schematic side view of the heating oven, forming tool and transport means,
- fig.2: shows a schematic cross-section of the heating oven, forming tool and transport means, and
- fig.3A-D: shows schematically successive steps in the forming of a steel blank in the forming tool.

### Detailed description of the drawings

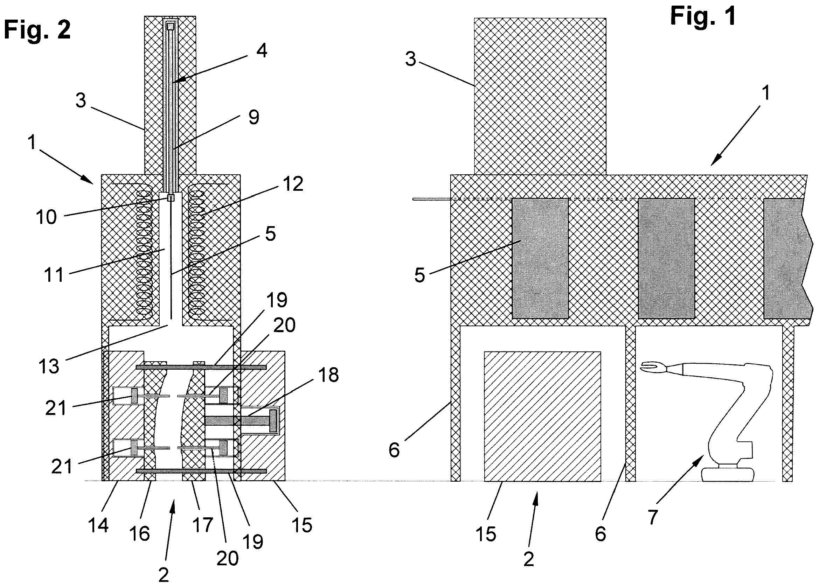

In fig.1 a side view is shown of the heating oven 1, forming tool 2 and a housing 3 for transport means 4. The heating oven 1 is of the conveyor type and is partially shown in section to show successive blanks 5 conveyed through the heating oven 1 from the right to the left in the drawing. The heating oven 1 is supported by columns 6 offering sufficient space below the heating oven 1 for forming tool 2 and robot 7. The robot 7 is used to remove a formed component from the forming tool 2.

Fig.2 shows in cross-section the transport means 4 in housing 3, the transport means including actuator means 8, an extendable arm 9 and gripper means 10 at the lower outer end of extendable arm 9. The gripper means 10 hold a blank 5 that has been conveyed through the heating oven 1 and in case of a steel sheet warmed to a temperature in the range of 900°-950°C. The blanks are conveyed in a manner known in the art and are taken from the conveying means by the gripper means 10. Grippers currently used to transport hot steel sheet in the die quenching process hold the steel by local contact pressure alone since austenitic steel is not attracted to magnets and rubber vacuum suckers disintegrate at high temperatures. When transporting thinner metal blanks at higher speed these grippers will need to hold the blank in several places on both vertical edges.

The heating oven 1 has a narrow heating chamber 11 through which the blanks 5 are conveyed and heated. In the example given in the drawing the heating of the blanks is by means of induction to which end induction coils 12 have been provided on both sides of heating chamber 11. The heating oven 1 is provided with a transport opening 13 directly above forming tool 2 which has sufficient length and width to allow the passage a blank 5, gripper means 10 and extendable arm 9. The blank heating process may require a protective atmosphere, in which case the oven may have a shutter door to seal the transport opening.

The forming tool 2 has stationary parts 14, 15 and forming parts 16, 17 with forming part 16 fixed to stationary part 14 and forming part 17 connected to an actuator 18. The actuator 18 is preferably of the quick action press in order to quickly form the blank while still at high temperature. The actuator illustrated is of the hydraulic type. Other types of actuator may be used such as an over-centering lever arm actuator. The forming parts 16, 17 are cooled by cooling means not further indicated in the drawing for simplicity's sake. Such cooling means could be water cooling as known in the art.

The travel of forming part 17 is guided by means of sliding pins 19 which run from one stationary part 14 to the other stationary part 15. These sliding pins 19 are positioned outside the area for the blank 5 that is to be formed between the forming parts 16, 17.

A number of holding pins 20 are provided with which a blank 5 can be kept in an upright position between the forming parts 16, 17 while these are in open position to receive a blank 5. In the forming parts 16, 17 through holes have been provided to let pass and guide the holding pins 20. Actuator means 21 are provided to control the position of the outer ends of the holding pins 20. The actuator means 21 are connected to the side of the forming parts opposite of the sides with which a blank is formed. In this design the actuator means 21 at the non-moving forming part 16. recesses are made to accommodate these in stationary part 14, although these can be mounted behind 14 if space permits.

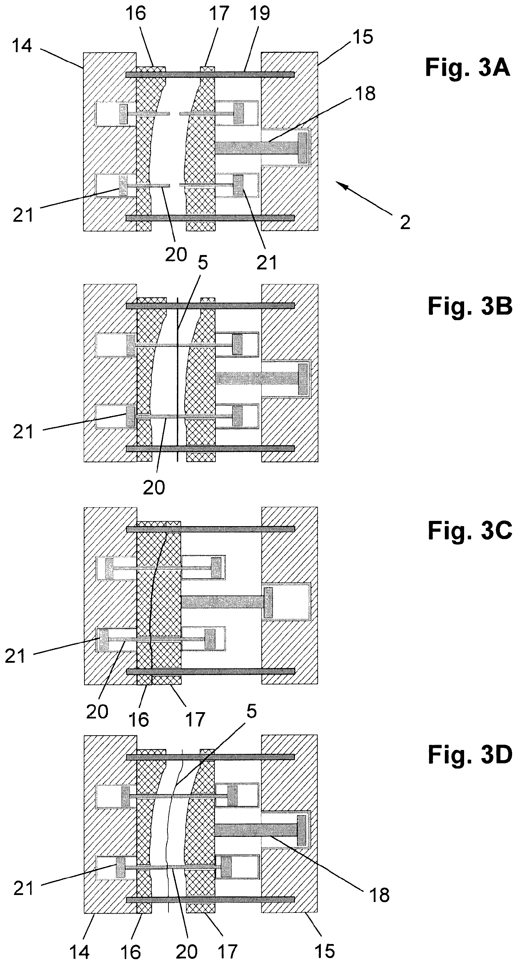

In fig.3A-D respective positions of the forming parts 16, 17 and those of the sliding pins 20 are shown. In fig.3A the forming parts 16, 17 are at maximum distance from each other to give space for the extendable arm 9 with gripper means 10 to lower a blank 5 between the forming parts 16, 17. The outer ends of opposite holding pins 20 are closer to each other than forming parts 16, 17 since the space between the outer ends is only needed to receive a flat blank 5.

In the position shown in fig.3B a blank 5 has been lowered between forming parts 16, 17 and holding pins 20 are moved against blank 5 to keep it in an upright position. The number of pairs of opposite holding pins should at least be two pairs, but preferably three or four opposite pairs of holding pins are used. The control of the actuator means of the holding pins 20 is preferably a computer control wherein the positioning of the holding pins 20 is controlled in dependence of the control of the extendable arm and gripping means 10. The moment that the extendable arm 9 has reached it lowermost position the outer ends of holding pins 20 are put against the blank 5 after which the gripping means 10 release the blank 5 and the extendable arm 9 is retracted.

Fig.3C shows press 2 with forming part 17 at the end of its travel with the blank 5 in its final shape between the forming parts 16, 17. The outer ends of holding pins 20 are now in line with the form surfaces of the forming parts 16, 17 and still butt against the formed blank 5. The repositioning of the holding pins in line with the advancement of forming part 17 and the forming of the blank can be done by controlling the actuator means 21 accordingly. However repositioning of the holding pins is easier by having the holding pins exert minimal force on the blank, which force is easily overcome by the force applied by actuator 18 through the forming parts 16, 17 on blank 5.

In fig.3D the forming part 17 is moved to its original position as shown in fig.3A. The formed blank 5 is detached from the forming parts by means of the holding pins 20 and moved to a free position in between the forming parts from where it can easily be removed by the robot 7.

## Claims

1. Arrangement for heating and working blanks, the arrangement comprising a heating oven (1) provided with a transport opening at the underside thereof, wherein the heating oven (1) is configured to heat blanks (5) in upright position, and transport means (4) to transport blanks through the transport opening out of the heating oven (1), the arrangement further comprises a forming tool (2) and wherein the heating oven (1) and forming tool (2) are positioned with respect to each other such that the transport opening of the heating oven (1) is positioned above the forming tool (2) such that the opening presented by the forming tool (2), when opened to receive a blank, and the transport opening of the heating oven are in register with each other, **characterised in that** the transport means (4) are positioned above the transport opening of the heating oven and comprises a gripping member for gripping (10) a blank, an extendable arm (9) connected to the gripping member (10) and actuator means to actuate the gripping member (10) and the extendable arm (9).

2. Arrangement according to claim 1, wherein the extendable arm is extendable in downward direction.

3. Arrangement according to claim 1 or 2, wherein the forming tool comprises form parts moveable with respect to each other in a direction transverse to the direction of transport of a blank from the heating oven by the transport means.

4. Arrangement according to one or more of claims 1-3, wherein the heating oven is a conveyor type of heating oven configured to heat blanks in upright position.

5. Arrangement according to claim 4, wherein the heating oven is an induction oven.

6. Arrangement according to one or more of claims 1-5, wherein holding pins are provided in the forming tool, to hold a blank in position between the form parts of the forming tool, and control means to control the holding pins.

7. Arrangement according to one or more of claims 1-6, wherein cooling means are provided to cool the forming tool.

8. Arrangement according to one or more of claims 1-7, wherein conveyor means are provided to convey blanks into the heating oven.

9. Method for heating and press hardening blanks using the arrangement according to one or more of claims 1-8, wherein the method comprises the steps of:
- supplying a blank in upright position in the heating oven,
- heating the metal blank to a temperature within a predefined temperature range,
- gripping the metal blank with a gripping member,
- transporting the hot blank in downward direction into an upright position between form parts of the forming tool,
- forming the hot blank in the forming tool, and
- cooling the formed metal blank in the forming tool.

10. Method according to claim 9, wherein the blank is a steel blank.

11. Method according to claim 10, wherein the steel blank comprises steel alloyed with boron.

12. Method according to claim 10 or 11, wherein the steel blank is heated to a predefined temperature in the range of 750° - 1100°C.

13. Method according to one or more of claims 10-12, wherein the thickness of the steel blank is 1.2mm or less.

## Patentansprüche

1. Anordnung zum Heizen und Bearbeiten von Rohlingen, wobei die Anordnung umfasst:
einen Heizofen (1), der an dessen Unterseite mit einer Transportöffnung versehen ist,
wobei der Heizofen (1) zum Heizen von Rohlingen (5) in aufrechter Position konfiguriert ist, und
Transportmittel (4), um Rohlinge durch die Transportöffnung aus dem Heizofen (1) zu transportieren, wobei die Anordnung ferner ein Formwerkzeug (2) umfasst und wobei
der Heizofen (1) und das Formwerkzeug (2) bezüglich einander so positioniert sind,
dass die Transportöffnung des Heizofens (1) über dem Formwerkzeug (2) so positioniert ist, dass die vom Formwerkzeug (2), wenn es zur Aufnahme eines Rohlings geöffnet ist, präsentierte Öffnung und die Transportöffnung des Heizofens aufeinander ausgerichtet sind, **dadurch gekennzeichnet, dass** die Transportmittel (4) über der Transportöffnung des Heizofens positioniert sind und ein Greifelement zum Greifen (10) eines Rohlings, einen verlängerbaren Arm (9), der mit dem Greifelement (10) verbunden ist, und ein
Betätigungsmittel zum Betätigen des Greifelements (10) und des verlängerbaren Arms (9) umfassen.

2. Anordnung nach Anspruch 1, wobei der verlängerbare Arm in eine nach unten gerichtete Richtung verlängerbar ist.

3. Anordnung nach Anspruch 1 oder 2, wobei das Formwerkzeug Formteile umfasst, die bezüglich einander in einer Richtung bewegt werden können, die quer zur Transportrichtung eines Rohlings vom Heizofen durch die Transportmittel verläuft.

4. Anordnung nach einem oder mehreren der Ansprüche 1 bis 3, wobei der Heizofen ein Heizofen vom Förderofentyp ist, der konfiguriert ist, um Rohlinge in einer aufrechten Position zu heizen.

5. Anordnung nach Anspruch 4, wobei der Heizofen ein Induktionsofen ist.

6. Anordnung nach einem oder mehreren der Ansprüche 1 bis 5, wobei Haltestifte,
um einen Rohling zwischen den Formteilen des Formwerkzeugs in Position zu halten, und Steuermittel, um die Haltestifte zu steuern, im Formwerkzeug bereitgestellt sind.

7. Anordnung nach einem oder mehreren der Ansprüche 1 bis 6, wobei Kühlmittel bereitgestellt sind, um das Formwerkzeug zu kühlen.

8. Anordnung nach einem oder mehreren der Ansprüche 1 bis 7, wobei Fördermittel bereitgestellt sind, um Rohlinge in den Heizofen zu fördern.

9. Verfahren zum Heizen und Pressen aushärtender Rohlinge mithilfe der Anordnung nach einem oder mehreren der Ansprüche 1 bis 8, wobei das Verfahren die folgenden Schritte umfasst:
- Zuführen eines Rohlings in aufrechter Position in den Heizofen,
- Heizen des Metallrohlings auf eine Temperatur innerhalb eines vorbestimmten Temperaturbereichs, Greifen des Metallrohlings mit einem Greifelement,
- Transportieren des heißen Rohlings in einer nach unten gerichteten Richtung in eine aufrechte Position zwischen Formteilen des Formwerkzeugs,
- Formen des heißen Rohlings im Formwerkzeug und
- Kühlen des geformten Metallrohlings im Formwerkzeug.

10. Verfahren nach Anspruch 9, wobei der Rohling ein Stahlrohling ist.

11. Verfahren nach Anspruch 10, wobei der Stahlrohling mit Bor legierten Stahl umfasst.

12. Verfahren nach Anspruch 10 oder 11, wobei der Stahlrohling auf eine vordefinierte Temperatur im Bereich von 750° - 1100°C geheizt wird.

13. Verfahren nach einem oder mehreren der Ansprüche 10 bis 12, wobei die Dicke des Stahlrohlings 1,2 mm oder weniger ist.

## Revendications

1. Agencement de chauffe et d'usinage d'ébauches, l'agencement comprenant un four de chauffe (1) pourvu d'une ouverture de transport au niveau de sa face inférieure,
dans lequel le four de chauffe (1) est configuré pour chauffer des ébauches (5) en position verticale, et
un moyen de transport (4) pour transporter des ébauches à travers l'ouverture de transport hors du four de chauffe (1), l'agencement comprend en outre un outil de forme (2) et dans lequel le four de chauffe (1) et l'outil de forme (2) sont positionnés l'un par rapport à l'autre de telle sorte que l'ouverture de transport du four de chauffe (1) soit positionnée au-dessus de l'outil de forme (2) de telle sorte que l'ouverture présentée par l'outil de forme (2), lorsqu'elle est ouverte pour recevoir une ébauche, et l'ouverture de transport du four de chauffe soient calées l'une avec l'autre,
**caractérisé en ce que** le moyen de transport (4) est positionné au-dessus de l'ouverture de transport du four de chauffe et comprend un élément de préhension destiné à saisir (10) une ébauche, un bras extensible (9) connecté à l'élément de préhension (10) et
un moyen actionneur destiné à actionner l'élément de préhension (10) et le bras extensible (9).

2. Agencement selon la revendication 1, dans lequel le bras extensible est extensible dans une direction vers le bas.

3. Agencement selon la revendication 1 ou 2, dans lequel l'outil de forme comprend des pièces de forme mobiles les unes par rapport aux autres dans une direction transversale à la direction de transport d'une ébauche depuis le four de chauffe par le moyen de transport.

4. Agencement selon l'une quelconque des revendications 1 à 3, dans lequel le four de chauffe est un four de chauffe de type convoyeur configuré pour chauffer des ébauches en position verticale.

5. Agencement selon la revendication 4, dans lequel le four de chauffe est un four à induction.

6. Agencement selon l'une ou plusieurs des revendications 1 à 5, dans lequel des axes de maintien sont prévus dans l'outil de forme, pour maintenir une ébauche en position entre les pièces de forme de l'outil de forme, et un moyen de commande pour commander les axes de maintien.

7. Agencement selon l'une ou plusieurs des revendications 1 à 6, dans lequel un moyen de refroidissement est prévu pour refroidir l'outil de forme.

8. Agencement selon l'une ou plusieurs des revendications 1 à 7, dans lequel un moyen convoyeur est prévu pour convoyer des ébauches dans le four de chauffe.

9. Procédé de chauffe et d'emboutissage à chaud d'ébauches utilisant l'agencement selon l'une ou plusieurs des revendications 1 à 8, dans lequel le procédé comprend les étapes de :
- conduite d'une ébauche en position verticale dans le four de chauffe,
- chauffe de l'ébauche métallique à une température comprise dans une plage de températures prédéfinie, écartement de l'ébauche métallique avec un élément de préhension,
- transport de l'ébauche chaude en direction vers le bas dans une position verticale entre des parties de forme de l'outil de forme,
- formation de l'ébauche chaude dans l'outil de forme, et
- refroidissement de l'ébauche de métal formée dans l'outil de forme.

10. Procédé selon la revendication 9, dans lequel l'ébauche est une ébauche en acier.

11. Procédé selon la revendication 10, dans lequel l'ébauche en acier comprend de l'acier allié à du bore.

12. Procédé selon la revendication 10 ou 11, dans lequel l'ébauche d'acier est chauffée à une température prédéfinie dans la plage de 750° à 1100° C.

13. Procédé selon l'une quelconque des revendications 10 à 12, dans lequel l'épaisseur de l'ébauche d'acier est de 1,2 mm ou moins.
